# EUROPEAN PATENT APPLICATION

(11) **EP 2 086 182 A1**
(43) Date of publication of application: **05.08.2009**
(21) Application number: 07831447.3
(22) Date of filing: 08.11.2007
(51) Int. Cl.: H04L 12/56, H04Q 7/22, H04Q 7/36

(54) **MOBILE COMMUNICATION MANAGEMENT SYSTEM AND MOBILE COMMUNICATION MANAGEMENT METHOD**

(30) Priority: 13.11.2006 JP 2006306156
(71) Applicant: NEC Corporation, Minato-ku Tokyo 108-8001 (JP)
(72) Inventor: AKIYOSHI, Ippei, Tokyo 108-8001 (JP)
(74) Representative: Betten & Resch
(86) International application number: PCT/JP2007/071716
(87) International publication number: WO 2008/059750

(57) **Abstract**

The signaling amount for acquisition of home addresses (HoA) and handover over the radio leg is reduced in a case where a mobile node (MN) requires multiple different communication IP addresses (Home address: HoA) for respective services. An AAA server holds service identifiers of all the services provided for the mobile node (MN) and home agent (HA) information, in addition to authentication information of the mobile node (MN). The AAA server also registers, for all the services provided for the mobile node (MN), an association of home addresses (HoA) used by the mobile node (HN) for the respective communication services with IP addresses (care-of address: CoA) having information of a network in which the mobile node (MN) resides, into the home agents (HA) associated with the corresponding service identifiers.

## Description

### Technical Field

The present invention relates to a mobile communication management system and more particularly relates to a mobile communication management system for radio communication terminals. This application claims a priority based on Japanese Patent Application No. 2006-306156, and the disclosure of Japanese Patent Application No. 2006-305156 is incorporated herein by reference.

### Background Art

One existing service for providing the mobility of a mobile node (MN) is the MIPv4 (Mobile IPv4) technique. In the MIPv4 technique, an anchor router called a home agent (HA) manages an association (binding information) of IP addresses (Home Address: HoA) used by a mobile node (MN) for communications with IP addresses (Care-of Address: CoA) used in the network in which the mobile node (MN residue; when an IP packet addressed to a home address (HoA) of a mobile node (MN) is received, the received IP packet is capsulated and transferred to the care-of address (CoA). This allows the mobile node (MN) of the destination to receive the packet. It should be noted that the care-of address (CoA) means "c/o" used in a letter. When a mobile node is connected to a mobile destination network in a mobile IP environment, for example, an additional address is given from the mobile destination network in addition to the usually used IP address. A home agent (HA) update the binding information of a mobile node (MN) in accordance with the movement of the mobile node (MN). In order to achieve this, a mobile node (MN) performs a position registration on a home agent (HA) through a foreign agent (FA) for each movement or periodically.

As disclosed in P. Calhoun et al., diameter Mobile IPv4 Application", [on-line.], IETF, http://ww.ietf.org/rfc/rfc4004.txt retrieved on September 14, 2006), a home agent (HA) and a foreign agent (FA) assign a home address (HoA) to a mobile node (MN), in cooperation with an AAA apparatus, when the foreign agent receives a position registration signal in which an "home address (HoA)/ home agent (HA) IP address field" is vacant, out of position registration signals transmitted by mobile nodes (MN), in one method for a mobile node (MN) to obtain a home address (HoA). It should be noted that the AAA apparatus is designated a server or other apparatuses for carrying out authentication, authorization and accounting.

When home addresses (HoA) suitable for respective services are assigned to a mobile node (MN), as is the case of recent mobile services, however, one mobile node is required to continuously hold different home addresses (HoA) at the same time, the number of which is equal to the number of the services the mobile node (MN) desires to use. Under such situation, maintaining communications and continuously providing services require a "home Address (HoA)" suitable for each service and "current position information] of the mobile node (MN); therefore, the mobile node (MN) needs to periodically communicate with the network by using a radio band, to obtain an individual home address (HoA) for each service and to thereby execute the position registration. This reduces available radio band.

In the above-described method, only one home address (HoA) is assigned by one process. This result from a fact that allowing a mobile node (MN) to receive mobility services by using a commonly-used MIPv4 technique irrespectively of the presence or absence of the foreign agent (FA) requires the position registration is required for each home address (HoA). The above-described cannot solve the above-described drawback.

In a technique disclosed in [3GPP TS23.060 "General Packet Radio Service (GPRS); Service description; Stage 2", [on-line]. 3GPP, Retrieved on September 14, 2006, http://ww.3gpp.org/ftp/Specs/archive/23 series/23.060 /23060-710.zip, which is not based on the MIPv4 though, an SGSN transmits a message called update PDP context request to a GGSN (corresponding to the home agent (HA) in the MIPv4) in which route switching is required, when a mobile node (MN) transmits a message called routing area update request, for the position registration to an SGSN (corresponding to the foreign agent (FA) in the MIPv4). As thus described, the assignments of communication IP addresses corresponding to the home addresses (HoA) are still individually executed, although the optimization of the signaling in the radio leg with regard to the position registration is considered.

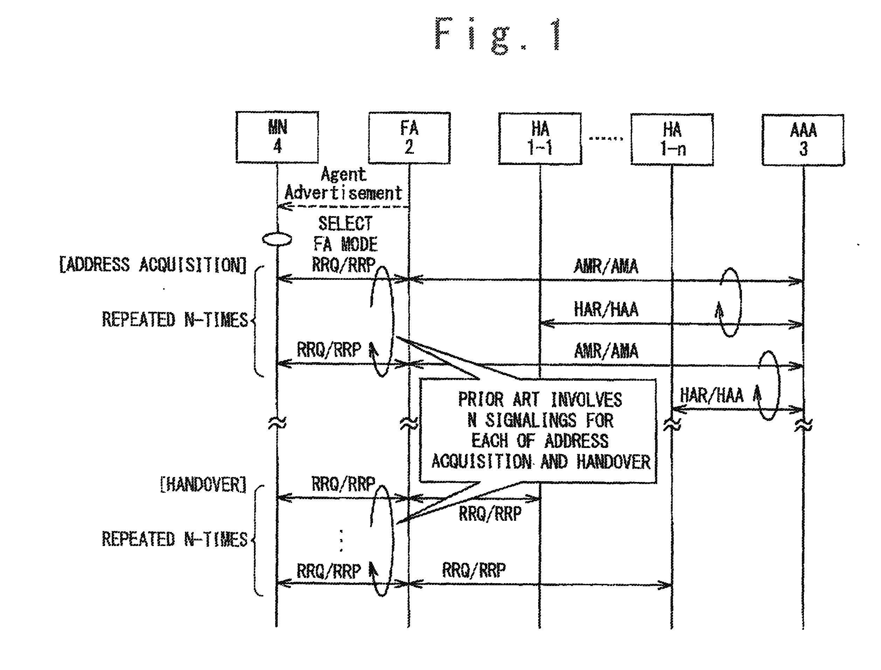

A description is given of an address acquisition method in the MIPv4 in the following with reference to FIG. 1. Here, a system that incorporates home agents (HA) 1-1 to 1-n, a foreign agent (FA) 2, an AAA apparatus 3 and a mobile node (MN) 4 is used as an example.

In FIG. 1, the mobile node (MN) 4 transmits a signaling for address acquisition to each of the home agents (HA) 1-1 to 1-n. In a commonly-used address acquisition method, however, the amount of signalings that pass through the radio legs between the mobile node (MN) 4 and the respective home agents (HA) 1-1 to 1-n is increased, since the mobile node (MN) 4 individually carries out the address acquisition for each of the home agents (HA) 1-1 to 1-n. In FIG. 1, for example, the mobile node (MN) 4 transmits a registration request (RRQ) to the foreign agent (FA) 2 and receives an RRP (Registration Reply) from the foreign agent (FA) 2, in each of the address obtainment and the handover, after firstly selecting a foreign agent (FA) mode in response to an agent advertisement (AA) from the foreign agent (FA) 2. At the time of the address acquisition, the foreign agent (FA) 2 transmits an AMR (AA - Mobile - Node - Request) through the home agents (HA) 1-1 to 1-n to the AAA apparatus 3 and receives an AMA (AA - Mobile - Node - Answer) from the AAA apparatus 3. In the address acquisition, each of the home agents (HA) 1-1 to 1-n transmits an HAR (Home Agent Request) to the AAA apparatus 3 and receives an HAA (Home Agent Answer) from the AAA apparatus 3. In addition, at the time of the handover, the foreign agent (FA) 2 transmits the RRQ to each of the home agents (HA) 1-1 to 1-n and receives the RRP from each of the home agents (HA) 1-1 to 1-n. In a commonly-used address acquisition method, each of the above-described communications is required to be repeated n times (n is equal to the number of the home agents (HA)), in each of the address acquisition and the handover. That is, n signalings are performed in each of the address obtainment and the handover.

As a related art, Japanese Laid Open Patent Application No. P2004-040755A discloses a combination mobile IP system and a mobility managing method that uses the same. In this related technique, the combination mobile IP system is divided into one home network and one or more foreign networks. The home network incorporates a home agent (HA) that has a main server for carrying out mutual radio communications with a mobile node (MN) and managing the home network. The foreign networks incorporate a foreign agent (FA) for relaying the mutual radio communications between the mobile node (MN) and the home agent (HA) and managing the foreign network.

Also, Japanese Laid Open Patent Application No. P2004-215118A discloses a mobile communication network, a radio network control apparatus, a mobile node (MN) and a congestion reducing method used therein. The mobile communication network in this related art is provided with a mobile node (MN), a radio base station (Node B), an IP-RNC (Internet Protocol-Radio Network Controller), an AAA server (Authentication, Authorization, and Accounting Sever), a home agent (HA), a contents server, a router, a core network (IP based Core Network) and the Internet.

Also, Japanese Laid Open Patent Application No. P2005-340982A discloses a communication system and a communication control apparatus. The communication network in this related art is provided with a home network, an IP network and a residing network of the mobile node (MN). Although theses networks are IPv6-based networks, the networks may be an IPv4-based network or other networks. The mobile node (MN) supporting the Mobile IPv6 may be replaced with a terminal based on the Mobile IPv4 or other protocols. Connections between the residing network and the IP network and between, the IP network and the home network are provided by a router or a gateway apparatus. The residing network and the home network may be connected through the router or the gateway apparatus. The home network is provided with a presence server, a home agent (HA), an information distribution server and an SIP server. The residing network contains the router providing an interface to the IP network. The used home agent (HA) is a home agent (HA) supporting Mobile IPv6. The home agent (HA) manages the position information of the mobile node (MN) that exists in a network other than the home network. The position information is the binding information of the home agent (HA) of the mobile node (MN) and the care-of address. The home agent (HA) has a function for capturing a packet transmitted to the home address (HoA) of the mobile node (MN) by a communication counterpart terminal, and then transferring the packet to the mobile node (MN) existing in the residing network. The mobile node (MN) is provided with a mobile-IP-supporting mobile node (MN) function and a function for processing the SIP protocol. The mobile node (MN) holds an SIP URI as an SIP identifier.

Also, Japanese Laid Open Patent Application No. P 2006-211656A discloses a registering method of a mobile node (MN) in a mobile IP environment and a mobile IP network system based on the foregoing method. The mobile IP network system of this related art includes; a first visit destination agent that belongs to a first subnet and has the care-of address (CoA) information of a visit destination agent adjacent to the first subnet, in the mobile IP environment; a second visit destination agent belonging to a second subnet; and a mobile node (MN) that moves from the first subnet to the second subnet and registers its own route in its own home agent (HA) through the second visit destination agent. At this time, the mobile node (MN) receives a message, which includes the care-of address (CoA) of the visit destination agent adjacent to the first subnet, from the first visit destination agent and gathers the care-of address (CoA) information and broadcasts the message including the gathered care-of address (CoA) information after moving to the second subnet. The second visit destination agent receives the broadcasted message and extracts the care-of address (CoA) information, and when the extracted care-of address (CoA) information is the same as the care-of address (CoA) information given by the second visit destination agent, transmits the extracted care-of address (CoA) information to the home agent (HA), and then registers the mobile node (MN) in the home agent (HA).

Also, Japanese Laid Open Patent Application No. P2004-512764 discloses a handover method of a mobile node (MN) having a mobile IP address in a mobile communication system. This related are is directed to smoothly carry out the handover, even when the mobile node (MN) having the mobile IP address carries out a communication in a foreign agent (FA) region that is not a home agent (HA) region, in the mobile communication system. In this related art, when a handover occurs as the mobile node (MN) moves from a first foreign agent (FA) region to a second foreign agent (FA) region adjacent to the first foreign agent (FA) region, a second foreign agent (FA) transmits a binding update message including the IP address of the second foreign agent (FA). In response to the binding update message, the first foreign agent (FA) transmits a binding acknowledge message, which includes a field indicative of an IP tunneling performance of the router linked to the corresponding node (CN) to which a call is linked by the mobile node (MN) to the second foreign agent (FA).

Moreover, Japanese Laid Open Patent Application No. P2006-505154A discloses a method and apparatus for assigning a dynamic home agent (HA) of a mobile IP. In this related art, a mobile IP registration request is distributed to one of a plurality of home agents (HA). The registration request is received from the foreign agent (FA) to which the mobile node (MN) roams. One of the plurality of home agents (HA) is selected. The registration request is then transferred to the selected one of the plurality of home agents (HA). The source IP address of the registration request is defined as the IP address of the foreign agent (FA) roamed by the mobile node (MN), and this allows the selected one of the plurality of home agents (HA) to directly transmit the mobile IP registration reply to the foreign agent (FA) without any alternate reception executed by a network apparatus. In this document, there is a suggestion indicating that the foreign agent (FA) can also obtain the IP address from the AAA server.

### Disclosure of Invention

An object of the present invention is to provide a mobile communication management system in which a signaling quantity passing through a radio leg is reduced for the management of the service identifiers and the home agent (HA) information of all the services to be provided for a mobile node (MN) in an AAA server.

In an aspect of the present invention, a mobile communication management system is provided with: home agents (HA) assigned to respective communication services; a foreign agent (FA) informing a mobile node (MN) of at least one information set including service identifiers of services provided for the mobile node (MN), home addresses (HoA) used for the services, and addresses of the home agents (HA) associated with the services, with the information set incorporated within one RRP (registration Reply) message; an authentication server holding the service identifiers and home agent (HA) information, in addition to authentication information of the mobile node (MN).

The authentication server registers for the services an association of the home addresses (HoA) with care-of addresses (CoA) having information of a network in which the mobile node (MN) resides, into the home agents (HA) associated with the service identifiers.

The authentication server informs the foreign agent of the service identifiers, the home addresses (HoA), and addresses of the home agents (HA) associated with the services. The foreign agent (FA) informs the mobile node (MN) of a fact that the foreign agent (FA) has a necessary function, by an agent advertisement (AA) message. The mobile node (MN) holds the service identifiers, corresponding home addresses (HoA), and addresses of the home agents (HA). The mobile node informs the foreign agent of information necessary for position registration onto all the home agents (HA) by an RRP (Registration Request) message. The foreign agent (FA) analyzes the RRQ received from the mobile node (MN) to individually generate RRQ messages for all the home agents (HA). The foreign agent (FA) transmits all the RRQ messages reproduced from the RRQ received from the mobile node (MN) to the home agents (HA) associated therewith.

In this case, the foreign agent (FA) analyzes the RRPs received from the home agents (HA) to generate the RRP message for the mobile node. The foreign agent (FA) transmits to the mobile node the RRP message generated by using the RRPs received from the home agents (MA).

In other words, in the mobile communication system of the present invention, a foreign agent (FA) informs a mobile node (MN) of at least one information set including service identifiers of services provided for the mobile node (MN), home addresses (HoA) used for the services, and addresses of the home agents (HA) associated with the services, with the information set incorporated within one RRP (registration Reply) message, analyzes an RRQ (registration request) received from the mobile node (MN) to individually generate RRQ messages for all the home agents (HA), transmits all the RRQ messages generated from the RRQ received from the mobile node (MN) to the home agents (HA) associated therewith, analyzes RRPs received from all the home agents (HA) to generate one RRP message for the mobile node, and transmits to the mobile node one RRP message generated by using the RRPs received from all the home agents (HA). An authentication server holds the service identifiers and home agent (HA) information, in addition to authentication information of the mobile node (MN), registers for the services an association of the home addresses (HoA) with care-of addresses (CoA) having information of a network in which the mobile node (MN) resides, into the home agents (HA) associated with the service identifiers, informs the foreign agent of the service identifiers of the services provided for the mobile node, the home addresses (HoA) used for the services, and addresses of the home agents (HA) associated with the services. In this case, the mobile node (MN) informs the foreign agent (FA) of information necessary for position registration into all the home agents (HA) with one RRQ message, and holds the home addresses (HoA) associated with the service identifiers and the addresses of the home agents (HA).

In another aspect of the present invention, a mobile communication management method of the present invention involves transmitting an agent advertisement (AA) to a mobile node, when the mobile node (MN) is connected through a foreign agent (FA) to a mobile network. When the mobile node receives the agent advertisement, a bulk RRQ (registration request) is transmitted to the foreign agent (FA) for acquisition of home addresses (HoA) for services provided for the mobile node (MN). The bulk RRQ is an RRQ which is to be bulk-transferred. The bulk-transfer means one-time transfer of a large amount of grouped data over a communication line. When the foreign agent (FA) receives the bulk RRQ, an inquiry is made by transmitting an AMR (AA-mobile-node-request) to an authentication server for asking for home addresses (HoA) for services provided for the mobile node and addresses of the home agents. When receiving the AMR and recognizing from the AMR that the mobile node (MN) desires to solve home addresses and home agents for the services, the authentication server obtains addresses of the home agents (HA) for the respective services from the home agent (HA) information associated with service identifiers held in the authentication server, and registers into the home agents (HA) home addresses of the mobile node (MN) and care-of addresses (CoA) having information of a network in which the mobile node resides. After the completion of the registrations into all the home agents (HA), the authentication server transmits an AMA (AA-mobile-node-answer) incorporating home addresses (HoA) associated with the service identifiers and addresses the home agents (HA) to the foreign agent (FA) after the registration into the home agents (HA). When receiving the AMA, the foreign agent (FA) generates a bulk RRP (registration reply) including home addresses associated with the service identifiers and address information of the home agents (HA) and transmits the bulk RRP to the mobile node (MN). The bulk RRP is an RRP to be bulk-transferred.

In still another aspect of the present invention, in a mobile communication management method of the present invention, a foreign agent (FA) transmits an agent advertisement (AA) to a mobile node, when the mobile node (MN) is connected to the foreign agent (FA). When the mobile node receives the agent advertisement (AA), a bulk RRQ (registration request) is transmitted to the foreign agent (FA). When receiving the bulk RRQ, the foreign agent (FA) reproduces RRQs for home agents (HA) assigned to respective communication services from the received bulk RRQ and transmits the RRQs to the respective home agents (HA) associated therewith. When receiving RRPs from all the home agents (HA), the foreign agent (FA) transmits a bulk RRP to the mobile node (MN).

In the respective mobile communication management methods described above, when registration into at least one of the home agents (HA) results in failure, an error code is incorporated into a code field of an RRP, and the foreign agent (FA) generates the bulk RRP to transmit to the mobile node (MN), even if an RRP received from at least one of the home agents indicates an error. When receiving the bulk RRP, the mobile node detects the failure of some position registrations by analyzing the bulk RRP, and performs a re-transmitting process to the home agents (HA) which suffer from registration failure.

In the respective mobile communication management methods described above, when the foreign agent (FA) does not detect that all the RRPs are returned after a given duration of time, an RRP for an RRQ for which the corresponding RRP is not returned is not generated within the foreign agent (FA), and then the bulk RRP is generated and transmitted to the mobile node (MN). When receiving the bulk RRP, the mobile node (MN) detects timeouts of some position registrations by analyzing the bulk RRP, and performs a re-transmitting process to the home agents (HA) which suffer from registration failure.

In still another aspect of the present invention, the mobile communication management method involves informing a first foreign agent of occurrence of a handover to a second foreign agent by transmitting an L2 triggbr signal to the first foreign agent (FA), when the mobile node detects that the mobile node moves from the first foreign agent (FA) to the second foreign agent (FA). When receiving the L2 trigger signal, the first foreign agent (FA) transmits context information to the second foreign agent (FA). When receiving the context information, the second foreign agent transmits an agent advertisement (AA) to the mobile node (MN). When receiving the agent advertisement, the mobile node (MN) detects the movement and transmits a bulk RRQ (registration request) to the second foreign agent (FA). When receiving the bulk RRQ, the second foreign agent reproduces RRQs for the home agents (HA) assigned to the respective communication services by using a bulk RRQ and the context information, and transmits the RP.Qs to the respective home agents (HA) associated therewith. When receiving RRPs (registration reply) from all the home agents (HA), the second foreign agent (FA) generates a bulk RRP and transmits the bulk RRP to the mobile node (MN).

The mobile communication management program of the present invention allows a computer to implement the respective mobile communication management method above-described. In this case, the mobile communication management program is a program for a computer to function as respective devices necessary for implementing the respective mobile communication management method above-described.

As thus described, in the present invention, an AAA server holds service identifiers of all the services provided for a mobile node (MN) and home agent (HA) information, in addition to authentication information of the mobile node (MN). The AAA server also registers, for all the services provided for the mobile node, an association of home addresses (HoA) used by the Mobile node for the respective communication services with care-of addresses (CoA) having information of a network in which the mobile node (MN) resides, into the home agents (HA) associated with the service identifiers. The AAA server informs the foreign agent of the service identifiers of all the services provided for the mobile node, the home addresses (HoA) used for the services, and addresses of the home agents (HA) associated with the services. On the other hand, the foreign agent (FA) informs the mobile node (MN) of the service identifiers of all the services provided for the mobile node (MN), the home addresses (HoA) used for the services, and the IP addresses of the home agents (HA) associated with the services, by an RRP (registration reply) message defined in MIPv4.

The present invention achieves reduction in the signaling amount over the radio leg by holding the home agent (HA) information associated with the service identifiers provided for the mobile node (MN) in the AAA server. The present invention also allows reduction in the signaling amount over the radio leg by consolidating RRQ/RRP messages and interfacing the consolidated RRQ/RRP messages between a mobile node (MN) and a foreign agent (FA).

### Brief Description of Drawings

FIG. 1 is a sequence chart showing an address acquisition method of a conventional MIPv4;
FIG. 2 is a block diagram showing a system configuration of the present invention;
FIG. 3 is a sequence chart showing a first operation of the present invention;
FIG. 4 is a sequence chart showing a second operation of the present invention;
FIG. 5 is a sequence chart showing a third operation of the present invention;
FIG. 6 is a sequence chart showing a fourth operation of the present invention; and
FIG. 7 is a sequence chart showing a fifth operation of the present invention.

### Best Mode for Carrying out the Invention

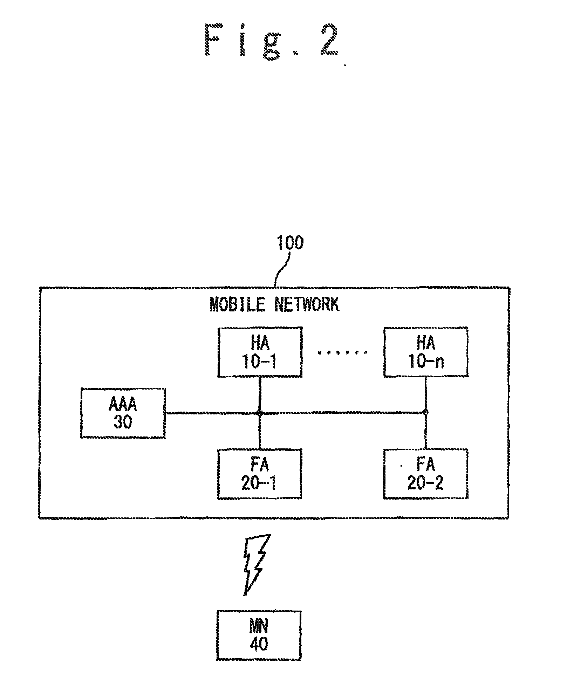

The mobile communication management system of the present invention will be described below with reference to the attached drawings, TIG. 2 is a block diagram showing the configuration of the mobile communication management system in a first exemplary embodiment of the present invention. With reference to FIG. 2, a mobile network 100 of this exemplary embodiment is provided with home agents (HA) 10-1 to 10-n, foreign agents (FA) 20-1, 20-2, and an AAA server (Authentication, Authorization, Accounting Server) 30.

The mobile network 100 is a network which provides a mobility service to a mobile node (MN) 40.

Each of the home agents (HA) 10-1 to 10-n is a router which has a home agent (HA) function. Here, the home agent (HA) function is assumed to be assigned for each communication service.

Each of the foreign agents (FA) 20-1, 20-2 is a router that has a foreign agent (FA) function. Here, each of the foreign agents (FA) 20-1 and 20-2 transmits to the mobile node (MN) 40 one or a plurality of information sets which include service identifiers of all the services provided for the mobile node (MN) 40, an IP address (Home Address: HoA) used for each service, and an IP address of the home agent (HA) associated with each service, with the information sets incorporated within one RRP (Registration Reply) message defined in the MIPv4. Also, each of the foreign agents (FA) 20-1 and 20-2 informs to the mobile node (MN) 40 that the each foreign agent is adapted to the mobile communication management system of the present invention by an agent advertisement (AA) message. As a method for informing to the mobile node (MN) 40 that the foreign agent (FA) 20-1 is adapted to the mobile communication management system of the present invention by using the agent advertisement. (AA), for example, a dedicated flag indicating that the foreign agent (FA) 20-1 is adapted to the mobile communication management, system of the present invention may be prepared within the agent advertisement (AA) . It should be noted that the flag means a variable prepared to check the satisfaction of configured conditions and a state of data. Usually, a flag is configured as a two-state value of ON/OFF (TRUE/FALSE, or SET/RESET) . A flag may be represented by 1 and 0 instead. Also, the foreign agents (FA) 20-1 and 20-2 each analyze an RRQ (Registration Request) received from the mobile node (MN) 40 and individually generate RRQ messages for all the home agents (HA) 10-1 to 10-n. Also, the foreign agents (FA) 20-2 and 20-2 each transmit all the RRQ messages to the corresponding home agent (HA). Also, the foreign agents (FA) 20-1 and 20-2 each analyze RRPs received from all the home agents (HA) 10-1 to 10-n and generate one RRQ message for the mobile node (MN) 40. Moreover, the foreign agents (FA) 20-1 and 20-2 each transmit one RRP message, which is generated by using the RRPs received from all the home agents (HA) 10-1 to 10-n, to the mobile node (MN) 40.

The AAA server 30 is an authentication server which has authentication, authorisation and accounting functions. Here, the AAA server 30 is assumed to hold the service identifiers of all the services provided for the mobile node (MN) 40 and the home agent (HA) information with regard to the home agents (HA) in a list format with the service identifiers associated with the home agent (HA) information, in addition to the authentication information of the mobile node (MN) 40 However, the present invention is not limited to this example, actually. Also, the AAA server 30 registers the association of home addresses (HoA) used in respective communication, services by the mobile node (MN) 40 with care-of addresses (CoA) of the mobile node (MN) 40 in the home agents (HA) associated with the service identifiers, for all the services provided for the mobile node (MN) 40. Moreover, the AAA server 30 informs at least one of the foreign agents (FA) 20-1 and 20-2 of the service identifiers of all the services provided for the mobile node (MN) 40, the home addresses (HoA) used for the respective services, and the IP addresses of the home agents (HA) associated with the respective services.

The mobile node (MN) 40 is a mobile terminal. Here, the mobile node (MN) 40 informs the foreign agents (FA) of information necessary for position registrations in all the home agents (HA) 10-1 to 10-n with one RRQ message. Also, the mobile node (MN) 40 holds the home addresses (HoA) associated with the service identifiers of all the services provided for the mobile node (MN) 40 itself, and the home agent (HA) addresses. Here, for each service, the service identifier, the home address (HoA) and the home agent (HA) address are assumed to be correlated with each other in a one-to-one relation and held in a list format. However, the present invention is not limited to this example.

In FIG. 2, the foreign agents (FA) 20-1 and 20-2 are directly connected to the AAA server 30. In some cases, however, the foreign agents (FA) 20-1 and 20-2 may be connected to the AAA server 30 through the proxy function of the AAA server for achieving roaming and the like, in response to the position at which the mobile node (MN) 40 reside.

Here, the above-described service identifiers may be port numbers, SIP-URIs, or the like. The SIP-URI is a uniform resource identifiers (URI) used for specifying the counterpart in the SIP (Session Initiation Protocol).

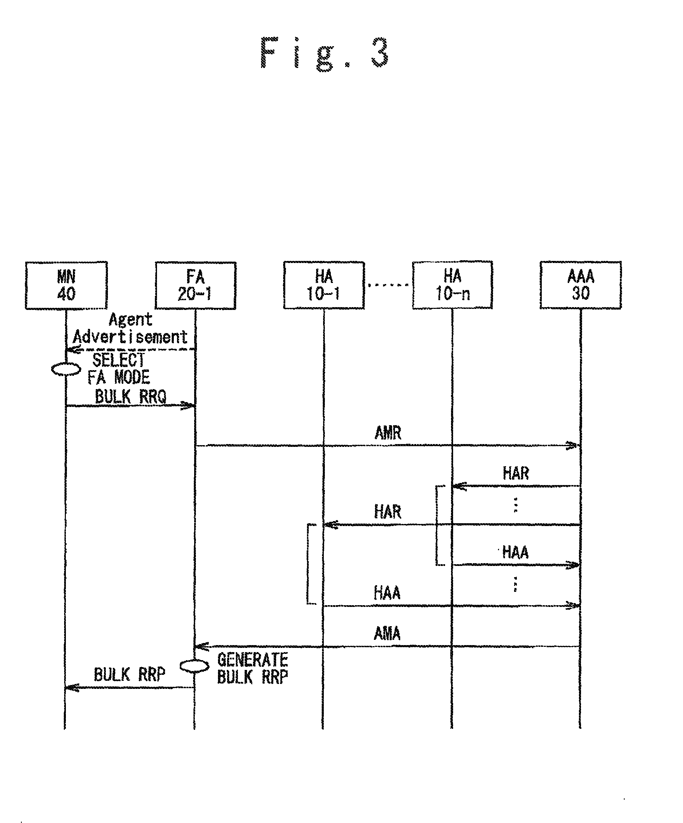

The operation for the acquisition of the home addresses (HoA) of the mobile node (MN) 40 in this exemplary embodiment will be described below with reference to the sequence chart shown in FIG. 3. Here, the foreign agent (FA) 20-1 out of the foreign agents (FA) 20-1 and 20-2 is used in one example. However, the present invention is not limited to this example.

### (1) Step S101

At first, after the mobile node (MN) 40 is connected to the mobile network 100 through the foreign agent (FA) 20-1, the foreign agent (FA) 20-1 transmits an agent advertisement (AA) to the mobile node (MN), in order to inform the mobile node (MN) 40 of the fact that the foreign agent (FA) 20-1 supports the foreign agent (FA) function and is adapted to the mobile communication management system of the present invention.

### (2) step S102

When receiving the agent advertisement (AA), the mobile node (MN) 40 detects that the foreign agent (FA) 20-1 supports the mobile communication management system of the present invention. This is followed by transmitting a bulk RRQ to the foreign agent (FA) 20-1, in order to acquire the home addresses (HoA) for all the services. The bulk RRQ is an RRQ to be bulk-transferred; the bulk transfer means one-time transfer of a large quantity of grouped data over the communication line. Here, the transmitted bulk RRQ incorporates a "transmission, source IP address", and the home address (HoA) and home agent (HA) field within the payload of the bulk RRQ is set to all zero. The bulk RRQ also incorporates an NAI (Network Access Identifies) of the mobile node (MN) 40 so that this RRQ can be identified as one from the mobile node (MN) 40. Here, it is assumed that the bulk RRQ incorporates the NAIs of the home agents (HA) 10-1 to 10-n within the payload and that the foreign agent (FA) 20-1 is explicitly informed of the fact that the mobile node (MN) 40 supports the mobile communication management system of the present invention. That is, the bulk RRQ includes the home addresses (HoA), the home agents (HA), the NAI of the mobile node (MN) and the NAIs of the home agents (HA) within the payload.

### (3) Step S103

When receiving the bulk RRQ, the foreign agent (FA) 20-1 transmits an AMR (AA. - Mobile - Node - Request) to the AAA server 30 and thereby asks for the home addresses (HoA) and the home agents (HA) assigned to the mobile node (MN) 40. The AMR includes the NAI (MN NAI) of the mobile node (MN) and the NAIs (HA NAIs) of the home agents (HA).

### (4) Step S104

When receiving the AMP, the AAA server 30 recognizes that the mobile node (MN) 40 desires to solve the home addresses (HoA) for all the services and the home agents (HA) from the HA NAIs included within the AMR. Here, the AAA server 30 hold the service identifiers of all the services provided for the mobile node (MN) 40, and the home agent (HA) information with regard to the home agents (HA) together with the authentication information of the mobile node (MN) 40, correlating the service identifiers with the home agent (HA) information. The AAA server 30 determines the home agent (HA) addresses for the respective services from the home agent (HA) information corresponding to the "all the service identifiers of the services provided for by the mobile node (MN) 40" held by itself and registers the home address (HoA) of the mobile node (MN) 40 and the care-of addresses (CoA) in the respective home agents (HA) 10-1 to 10-n. Here, the home address (HoA) of the mobile node (MN) 40 and the care-of addresses (CoA) are obtained from the IP address of the foreign agent (FA) 20-1, the associated area of which the mobile node (MN) 40 resides, and the transmission source IP address of the AMR and the like. The home agent (HA) information managed by the AAA server 30 may include the IP addresses of the home agents (HA), the home prefixes, the HA NAIs and the like.

### (5) Step S105

When the registrations to all the home agents (HA) are completed, the AAA server 30 transmits to the foreign agent (FA) 20-1 an AMA (AA - Mobile - Node - Answer) which includes the home addresses (HoA) associated with all the service identifiers of the services provided for the mobile node (MN) 40 and the IP addresses of the home agents (HA).

### (6) Step S106

When receiving the AMA, the foreign agent (FA) 20-1 generates a bulk RRP that includes the home addresses (HoA) associated with all the service identifiers of the services provided for the mobile node (MN) 40 and the IP address information of the home agents (HA), and transmits the bulk RRP to the mobile node (MN) 40. The bulk RRP is an RRP to be bulk-transferred.

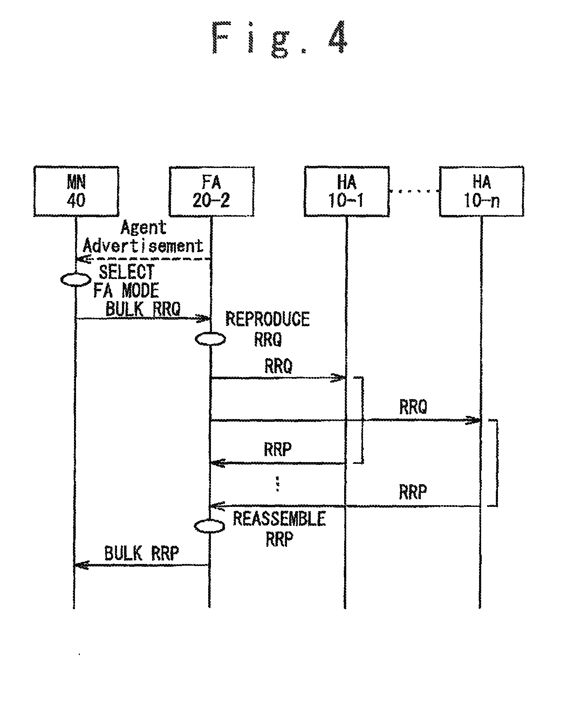

The operation of the handover of the mobile node (MN) 40 in this exemplary embodiment will be described below with reference to the sequence chart shown in FIG. 4. The sequence shown in FIG. 4 indicates the operation in the handover of the mobile node (MN) 40 from the foreign agent (FA) 20-1 to the foreign agent (FA) 20-2.

### (1) Step S201

At first, the foreign agent (FA) 20-2 transmits an agent advertisement (AA) to the mobile node (MN) 40 when the mobile node (MN) 40 is connected to the foreign agent (FA) 20-2.

### (2) Step S202

When receiving the agent advertisement (AA), the mobile node (MN) 40 detects that the mobile node (MN) 40 has moved to the foreign agent (FA) 20-2 from the prefix information included in the agent advertisement (AA). That is, the mobile node (MN) 40 recognizes that the mobile node (MN) 40 is connected to the foreign agent (FA) 20-2 from the fact that the mobile node (MN) 40 has received the agent advertisement (AA). This is followed by transmitting a bulk RRQ to the foreign agent (FA) 20-2 in order to carry out the handover. Here, the payload of the transmitted bulk RRQ incorporates the payloads of the individual RRQs for all the home agents (HA), with the incorporated payloads correlated with the corresponding home agents (HA) and described in a list format.

### (3) Step S203

When receiving the bulk RRQ, the foreign agent (FA) 20-2 reproduces RRQs for the respective home agents (HA) from the received bulk RRQ, and transmits the reproduced RRQ to the corresponding respective home agents (HA) 10-1 to 10-n.

### (4) Step S204

When receiving the RRPs from all the home agents (HA) 10-1 to 10-n, the foreign agent (FA) 20-2 transmits a bulk RRP to the mobile node (MN) 40. Here, the payload of the transmitted bulk RRP incorporates the payloads of the individual RRPs from all the home agents (HA) with the incorporated payloads correlated to the corresponding home agents (HA) and described in a list format.

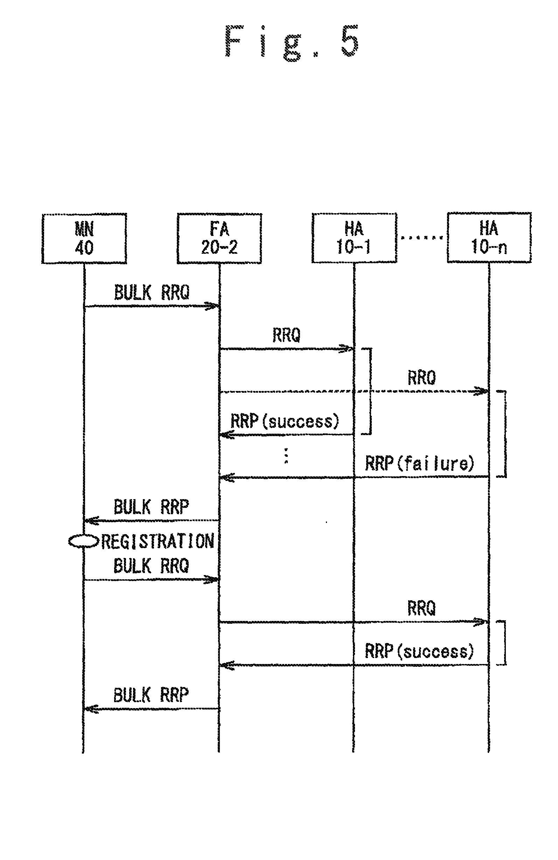

Next, a description is given of the operation when a failure occurs in the handover of the mobile node (MN) 40 due to a problem within the home agent (HA) (shortage of the resource of a home agent (HA), for example) in this exemplary embodiment, with reference to the sequence chart shown in FIG. 5. The sequence chart of FIG. 5 shows the operation in the handover of the mobile node (MN) 40 from the foreign agent (FA) 20-1 to the foreign agent (FA) 20-2, similarly to FIG. 4.

The procedure until the foreign agent (FA) 20-2 transmits the RRQs to the respective home agents (HA) 10-1 to 10-n is similar to the procedure shown in FIG. 4.

### (1) Step S301

When the registration into at least one of the home agents (HA) 10-1 to 10-n results in a failure due to any reason, an error code is incorporated in the code field of the RRP.

The foreign agent (FA) 20-2 generates a bulk RRP similarly to FIG. 4 and transmits the bulk RRP to the mobile node (MN) 40, even when the RRP received from at least one of the home agents (HA) 10-1 to 10-n indicates an error.

### (2) Step S302

When receiving the bulk RRP, the mobile node (MN) 40, which is able to analyze the bulk RRP and to detect the failure in the several position registrations, performs processes of the re-transmission and the like for the home agent(s) (HA) in which the registration is failed.

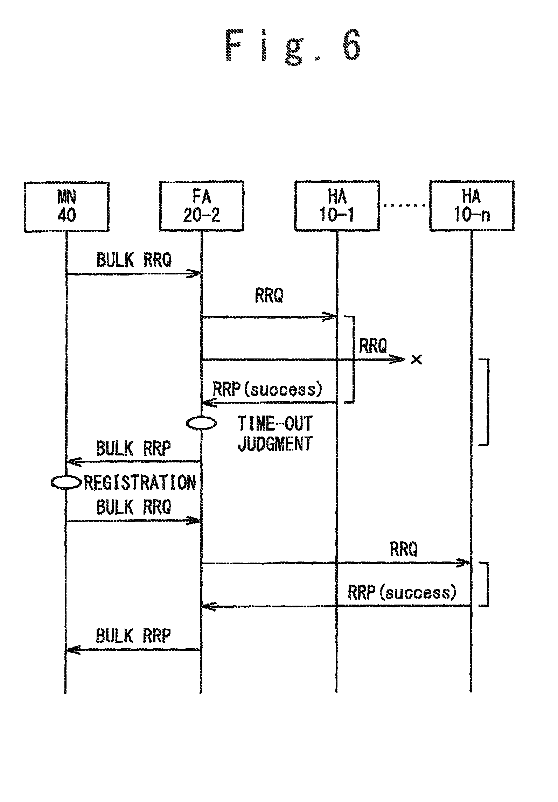

Next, a description is given of the operation for the case when an RRQ message loss in this exemplary embodiment results in the failure in the handover of the mobile node (MN) 40, with reference to the sequence chart shown in FIG. 6. The sequence chart shown in FIG. 6 indicates the operation in the handover of the mobile node (MN) 40 from the foreign agent (FA) 20-1 to the foreign agent (FA) 20-2, similarly to FIG. 4.

In FIG. 6, the procedure until the foreign agent (FA) 20-2 transmits the RRQs to the respective home agents (HA) 10-1 to 10-n is similar to the procedure in FIG. 4.

### (1) Step S401

When an RRQ message is lost for any reason before the arrival at the home agents (HA) 10-1 to 10-n, the RRP corresponding thereto is not replied to the foreign agent (FA) 20-2. When the foreign agent (FA) 20-2 detects that all the RRPs are not replied after waiting for a certain time, an RRP addressed to the mobile node (MN) 40 is generated within the foreign agent (FA) 20-2 for the RRQ to which the RRP from the home agents (HA) 10-1 to 10-n is not replied, and a bulk RRP incorporating the RRP prepared by the foreign agent (FA) 20-2 is generated and transmitted to the mobile node (MN) 40. Here, the code field of the RRP prepared by the foreign agent (FA) 20-2 includes a value implying that the handover is failed because of the timeout.

### (2) Step S402

When receiving the bulk RRP, the mobile node (MN) 40, which is able to analyze the bulk RRP and to detect that the several position registrations result in timeout, performs a re-transmitting process on the home agent (HA) in which the registration is failed.

In the following, a description is given of a second exemplary embodiment of the present invention.

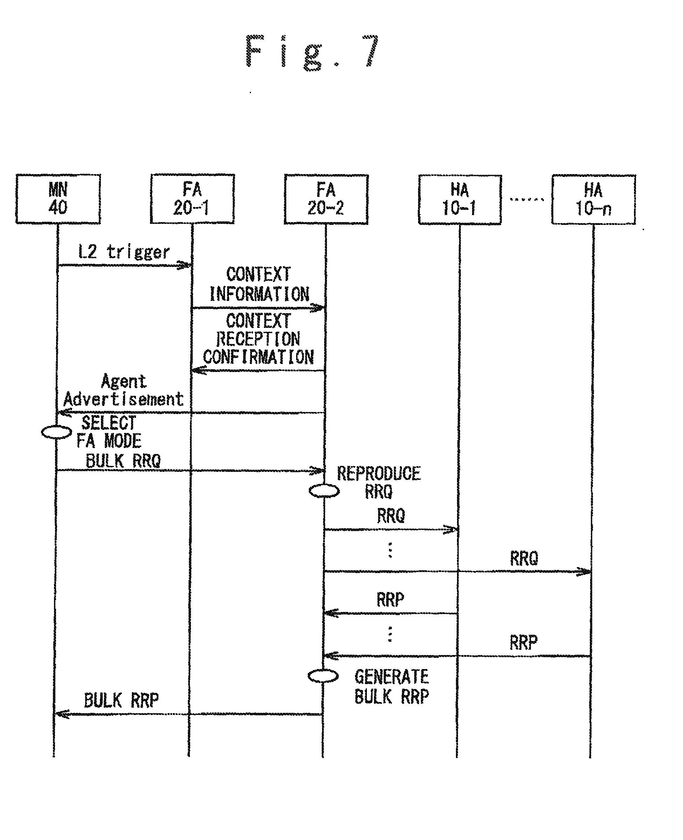

In the second exemplary embodiment of the present invention, the handover procedure is further devised while the basic configuration is unchanged as shown in FIG. 2. FIG. 7 shows the sequence chart thereof. In FIG. 7, the foreign agents (FA) 20-1 and carry out the delivery and receipt of context information of the mobile node (MN) 40 at the time of the handover.

The operation of the mobile node (MN) 40 in the handover in this exemplary embodiment will be described below with reference to the sequence chart shown in FIG. 7. The sequence shown in FIG. 7 indicates the operation in the handover of the mobile node (MN) 40 from the foreign agent (FA) 20-1 to the foreign agent (FA) 20-2. (1) Step S501

When detecting the movement from the foreign agent (FA) 20-1 to the foreign agent (FA) 20-2, the mobile node (MN) 40 first transmits an L2 trigger signal to the foreign agent (FA) 20-1 to inform the foreign agent (FA) 20-1 of a hanover of the mobile node (MN) 40 to the foreign agent (FA) 20-2. For example, a measurement report defined in the GPRS (General Packet Radio Service) may be used as the L2 trigger signal.

### (2) Step S502

When receiving the L2 trigger signal, the foreign agent (FA) 20-1 transmits context information to the foreign agent (FA) 20-2. This context information includes the NAI of the mobile node (MN) 40 and the registration information for all the home agents (HA) 10-1 to 10-n. The registration information for the home agents (HA) 10-1 to 10-n may include, for example, the service identifier, the home addressees (HoA), the home agent (HA) addresses, the tunneling scheme, the flag information within the RRQ, the lifetime, and the like.

### (3) Step S503

When obtaining the context information, the foreign agent (FA) 20-2 transmits an agent advertisement (AA) to the mobile node (MN) 40.

### (4) Step S504

When receiving the agent advertisement (AA), the mobile node (MN) 40 transmits a bulk RRQ to the foreign agent (FA) 20-2. Here, the payload of the transmitted bulk RRQ includes only the home addresses (HoA) used in the respective services and the dynamic information (the authentication information and the like) included within individual RRQs for all the home agents (HA).

### (5) Step S505

When receiving the bulk RRQ from the mobile node (MN) 40, the foreign agent (FA) 20-2 reproduce RRQs for the respective agents (HA) by using the bulk RRQ and the context information, and transmits the RRQs to the corresponding respective home agents (HA) 10-1 to 10-n.

### (6) Step S506

When receiving the RRPs from all the home agents (HA) 10-1 to 10-n, the foreign agent (FA) 20-2 generates a bulk RRP and transmits the bulk RRP to the mobile node (MN) 40. Here, the payload of the transmitted bulk RRP includes only the home addresses (HoA) used in the respective services and the dynamic information (the handover result, the authentication information and the like) included inside the individual RRPs from all the home agents (HA).

As mentioned above, in the second exemplary embodiment of the present invention, the data quantity of the signaling transmitted through the radio leg is reduced in the handover, thereby enabling the further effective utilization of the radio band.

As mentioned above, the present invention effective reduces the signaling quantities in the handover and the acquirement of the home addresses (HoA) transmitted through the radio leg in the mobile communication management system that provides the IP service, when a mobile node (MN), such as a mobile terminal, requires a plurality of different communication IP addresses (Home Address: HoA) at the same time for the respective services.

To provide a description about a feature of the present invention with reference to FIG. 2, the AAA server holds the service identifiers of all the services provided for the mobile node (MN) and the home agent (HA) information, together with the authentication information of the mobile node (MN).

Also, with reference to FIG. 3, the AAA server registers the association of the home address (HoA) used in each communication service by the mobile node (MN) and the IP address (care-of address: (CoA)) having the network information in which the mobile node (MN) resides, in the home agent (HA) associated with the corresponding service identifier, for all the services provided for the mobile node (MN).

Also, with reference to FIG. 3, the AAA server informs the foreign agent (FA) of the service identifiers of the services provided for the mobile node (MN); the home addresses (HoA) used in the services; and the IP addresses of the home agents (HA) associated with the services.

Also, with reference to FIG. 3, the foreign agent (FA) informs the mobile node (MN) of the service identifiers of the services provided fro the mobile node (MN); the home addresses (HoA) used in the services; and the IP addresses of the home agents (HA) associated with the services, with the service identifiers, the home addresses (HoA) and the IP addresses incorporated in an RRP (Registration Reply) message of the MIPv4.

Also, with reference to FIG. 3, the foreign agent (FA) informs the mobile node (HN) of the fact that the foreign agent (FA) is adapted to the mobile communication management system of the present invention by the agent advertisement (AA) message.

Also, with reference to FIG. 4, the mobile node (MN) informs the foreign agent (FA) of the information necessary for the position registrations for all the home agents (HA), by using one RRQ (Registration Request) message.

Also, with reference to FIG. 4, the mobile node (MN) holds the home addresses (HoA) associated with the service identifiers of all the services provided for the mobile node (MN), and the home agent (HA) addresses.

Also, with reference to FIG. 4, the foreign agent (FA) analyzes the RRQ received from the mobile node (MN) and individually generates the RRQ messages for all of the home agents (HA).

Also, with reference to FIG. 4, the foreign agent (FA) transmits all the RRQ messages generated by using the RRQ received from the mobile node (MN) to the corresponding home agents (HA).

Also, with reference to FIG. 4, the foreign agent (FA) analyzes the RRPs received from all the home agents (HA) and creates one RRP message for the mobile node (MN).

Also, with reference to FIG. 4, the foreign agent (FA) transmits one RRP message for the mobile node (MN) generated by using the RRPs received from all the home agents (HA) to the mobile node (MN).

In this way, the present invention reduces the signaling quantities for the acquirement of the home addresses (HoA) and the position registration over the radio leg, since the information required to solve the home addresses (HoA) and to register the position is managed on the network side even when the mobile node (MN) requires multiple different home addresses (HoA) for respective services at the same time.

Additionally, the present invention may be applied to the mobile communication networks, such as 3GPP, 3GPP2, and WiMAX Forum.

## Claims

1. A mobile communication management system comprising:
home agents (HA) assigned to respective communication services;
a foreign agent (FA) informing a mobile node (MN) of at least one information set including service identifiers of services provided for said mobile node (MN), home addresses (BoA) used for said services, and addresses of said home agents (HA) associated with said services, with said at least one information set incorporated within one RRP (registration Reply) message;
an authentication server holding said service identifiers and home agent (HA) information, in addition to authentication information of said mobile node (MN).

2. The mobile communication management system according to claim 1, wherein said authentication server registers for said services an association of said home addresses (HoA) with care-of addresses (CoA) having information of a network in which said mobile node (MN) resides, into said home agents (HA) associated with the corresponding service identifiers.

3. The mobile communication management system according to claim 1 or 2, wherein said authentication server informs said foreign agent of said service identifiers, said home addresses (HoA), and addresses of said home agents (HA) associated with said services.

4. The mobile communication management system according to any of claims 1 to 3, wherein said foreign agent (FA) informs said mobile node (MN) of a fact that said foreign agent (FA) has a necessary function, by an agent advertisement (AA) message.

5. The mobile communication management system according to any of claims 1 to 4, wherein said mobile node (MN) holds said service identifiers, corresponding home addresses (HoA), and addresses of said home agents (HA).

6. The mobile communication management system according to any of claims 1 to 5, wherein said mobile node informs said foreign agent of information necessary for position registration onto said home agents (HA) by an RRP (registration request) message.

7. The mobile communication management system according to claim 6, wherein said foreign agent analyzes the RRQ received from said mobile node (MN) to individually reproduce RRQ messages for said home agents (HA).

8. The mobile communication management system according to claim 6 or 7, wherein said foreign agent (FA) transmits the RRQ messages reproduced from the RRQ received from said mobile node (MN) to said home agents (HA) associated therewith.

9. The mobile communication management system according to any of claims 1 to 8, wherein said foreign agent (FA) analyzes the RRP received from said hose agents (HA) to generate the RRP message for said mobile node.

10. The mobile communication management system according to any of claims 1 to 9, wherein said foreign agent (FA) transmits to said mobile node the RPP message generated by using the RRPs received from said home agents (HA).

11. A mobile communication management method comprising;
an (a1) step of a foreign agent transmitting an agent advertisement (AA) to a mobile node, when said mobile node (MM) is connected to said foreign agent (FA);
an (a2) step of transmitting a bulk RRQ (registration request) to said foreign agent (FA) when said mobile node receives the agent advertisement;
an (a3) step of generating RRQs for home agents (HA) assigned to respective communication services from the received bulk RRQ, when said foreign agent (FA) receives the bulk RRQ;
an (a4) step of transmitting a bulk RRP to said mobile node (MN) when said foreign agent receives RRPs from said home agents (HA).

12. The mobile communication management method according to claim 11, wherein said (a3) step includes:
an (a31) step of making an inquiry by transmitting an AMR (AA-mobile-node-request) to said authentication server to ask for home addresses (HoA) for services provided for said mobile node and addresses of said home agents;
an (a32) step of obtaining addresses of said home agents (HA) for the respective services from said home agent (HA) information associated with service identifiers held in said authentication server, and registering into said home agents (HA) home addresses of said mobile node (MN) and care-of addresses (CoA) having information of a network in which said mobile node resides, when said authentication server receives the AMR and recognizes from the AMR that said mobile node (MN) desires to solve home addresses and home agents for said services;
an (a33) step of said authentication server transmitting an AMA (AA-'mobile-node-answer) incorporating home addresses (HoA) associated with said service identifiers and addresses said home agents (HA) to said foreign agent (FA) after the registration into said home agents (HA) ; and
an (a34) step of generating a bulk RRP (registration reply) including home addresses associated with said service identifiers and address information of said home agents (HA) when said foreign agent (FA) receives the AMA.

13. The mobile communication management method according to claim 12, wherein said (a3) step includes:
an (a35) step of generating the bulk RRP even when a code field of an RRP includes an error code for failure of registration into said home agents (HA) and the RPP received from said home agents (HA) indicates an error; and
an (a36) step of detecting failure of position registration by analyzing the bulk RRP when said mobile node (MN) receives the bulk RRP, and performing a re-transmitting process to said home agents (HA) which snuffer from registration failure.

14. The mobile communication management method according to any of claims 11 to 13, further comprising:
an (a5) step of, when said foreign agent (FA) detects that an RRP is not returned after a given duration of time, generating the bulk RRP and transmitting the bulk RRP, after generating an RRP within said foreign agent (FA) for an RRQ for which a corresponding RRP is not returned; and
an (a6) step of detecting timeout of position registration by analyzing the bulk RRP when said mobile node (MN) receives the bulk RRP, and performing a re-transmitting process to said home agents (HA) which suffer from registration failure.

15. The mobile communication management method according to any of claims 11 to 14, further comprising:
a (b1) step of, when said mobile node detects that said mobile node moves from a first foreign agent (FA) to a second foreign agent (FA), informing said first foreign agent of occurrence of a handover to said second foreign agent by transmitting an L2 triggbr signal to said first foreign agent (FA);
a (b2) step of transmitting context information to said second foreign agent (FA), when said first foreign agent (FA) receives the L2 triggbr signal;
a (b3) step of transmitting an agent advertisement (AA) to said mobile node (MN), when said second foreign agent receives the context information;
a (b4) step of detecting the movement and transmitting an bulk RRQ (registration request) to said second foreign agent (FA), when said mobile node (MN) receives the agent advertisement;
a (b5) step of reproducing RRQs for said home agents (HA) assigned to the respective communication services by using an bulk RRQ and the context information, when said second foreign agent receives the bulk RRQ; and
a (b6) step of generating a bulk RRP and transmitting the bulk RRP to said mobile node (MN) when said second foreign agent (FA) receives RRPs (registration reply) from said home agents (HA).
